# EUROPEAN PATENT APPLICATION

(11) **EP 4 825 636 A1**
(43) Date of publication of application: **21.10.2026**
(21) Application number: 25170281.7
(22) Date of filing: 14.04.2025
(51) Int. Cl.: B60L 3/00, B60L 58/19, B60L 58/21, H02J 7/00

(54) **ELECTRICAL ENERGY SYSTEM, VEHICLE AND METHOD**

(71) Applicant: SAMSUNG SDI CO., LTD., Yongin-si, Gyeonggi-do 17084 (KR)
(72) Inventor: Erhart, Michael, 8054 Seiersberg-Pirka (AT)
(74) Representative: Gulde & Partner

(57) **Abstract**

The present disclosure refers to an electrical energy system (100) and a method for a vehicle (1000).

The electrical energy system (100) for a vehicle (1000) includes a high voltage system (10) including a plurality of battery cells (12) arranged in at least two strings (14a, 14b) of battery cells (12), the battery cells (12) of each string (14a, 14b) being connected in series, a low voltage system (16), at least one DC/DC converter (18a, 18b) for each of the strings (14a, 14b) of battery cells (12) connected in series to respective opposite ends of the strings (14a, 14b) of battery cells (12), the DC/DC converters (18a, 18b) being configured to down-convert a high voltage from the high voltage system (10) to a low voltage provided to the low voltage system (16), a cell supervision system (20) for supervising voltages of individual battery cells (12) of the high voltage system (10) including a separate communication loop for each of the strings (14a, 14b) of battery cells (12) for independently supervising battery cell voltages within each of the strings (14a, 14b) of battery cells (12), a switching unit (24) configured to selectively connect the strings (14a, 14b) in series or disconnect the strings (14a, 14b) from each other and to selectively connect at least one of the strings (14a, 14b) with or disconnect at least one of the strings (14a, 14b) from the high voltage system (10) and the low voltage system (16) and a control unit (26) configured to, in a case of a failure of one of the communication loops, one of the DC/DC converters (18a, 18b) and/or one of the strings (14a, 14b), control the switching unit (24) to disconnect the affected string (14a, 14b) from the high voltage system (10) and the low voltage system (16) and to connect or keep the respective other string (14b, 14a) connected with the high voltage system (10) and/or the low voltage system (16).

## Description

### Field of the Disclosure

Embodiments of the present disclosure relate to an electrical energy system and a method for a vehicle. The present disclosure further pertains to a vehicle including the electrical energy system.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. Common battery cell formats, include, for example, cylindrical, prismatic, and pouch.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common cell management unit and arranged in a housing. In the modular design, pluralities of battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

In electric vehicles, the Cell Contacting System (CCS) represents the initial stage of electrical power transmission between the battery cell and consumers or power sources. The number of battery cells in electric vehicles typically ranges from a few hundred to a few thousand. A fully charged lithium-ion single cell typically exhibits a maximum voltage of 4.2 V, with the capacity enabling the delivery of currents in the range of a few amperes up to several 100 amperes. Battery systems for passenger cars operate with voltages between 400 V and 800 V and must be capable of delivering currents of up to 500 A or even more. In order to achieve the requisite voltage and current levels, individual battery cells are connected in parallel and in series.

Therefore, the battery cells are grouped into several functional blocks, which are then connected electrically to form the overall battery system. The aforementioned blocks are then reinforced within a housing structure and are collectively referred to as a battery module. While the battery modules are typically connected in series, the battery cells within the modules are connected in both parallel and series. In the case of cylindrical battery cells, which are relatively small, a number of cells are connected in parallel. In the case of larger battery cells, it is not uncommon for only two to be connected in parallel, or for there to be a pure series connection. It is precisely this electrical interconnection of the battery cells at the module level that the CCS assumes. Consequently, these are available in a multitude of designs and geometries, specifically adapted to the respective battery module.

In addition to the electrical interconnection of the individual battery cells, the CCS is also responsible for the implementation and integration of other functions. These are primarily the potential points for voltage monitoring and temperature-dependent resistors (thermistors) for temperature measurement at critical points. Furthermore, it is essential to ensure that the aforementioned signals are conveyed to the battery management system (BMS) at the module level. This system is also known as the cell monitoring unit (CMU) or BMS slave. The additional functions allow for further expansion of the options for the structure, geometry, and materials of the CCS.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually include a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

For safety critical electronic control units ECU's (e.g.: autonomous driving), a redundant power supply is needed, e.g. for the 12V boardnet. For 12V power supply of different components connected to the 12V onboard power system of the vehicle, electrical vehicles usually have a 12V lead acid battery and a DC/DC converter connected between the high voltage and the 12V boardnet. In general, the 12V lead acid battery may take the role of buffering the 12V onboard power system. The 12V lead acid battery may be charged over a DC/DC converter connected to the high voltage battery system. The DC/DC converter and the 12V lead acid battery may be used as redundant power supplies to the 12V onboard power system used for safety critical systems, e.g. in autonomous driving. This leads to an ASIL B(D) safety requirement to the battery pack and the DC/DC for availability. For example, a possible solution to overcome the availability requirements ASIL-B(D) would be to install redundant sensorics which will, however, increase the costs.

In a case where the high voltage supply fails, e.g. due to a thermal runaway of the high voltage system, or the DC/DC converter fails, the DC/DC converter connected to the high voltage system is unable to further supply the 12V onboard power system with 12V current. However, as there is no starter for the combustion engine required in electrical vehicles, the 12V lead acid battery is nowadays getting smaller and smaller. Furthermore, since the 12V lead acid batteries generally cause additional weight to the vehicle, in most of the cases the vehicle will be supplied mainly by the DC/DC converter connected to the high voltage system. A degraded 12V lead acid battery may not cause to any issue, as long the DC/DC converter is working. However, in the case of a failure of the DC/DC converter or of the high voltage system, the 12V lead acid battery has to provide the full boardnet power. If the degradation was not detected before a safety critical event would happen because of the loss of the supply of the 12V boardnet.

Therefore, there exists a demand for an electric energy system with increased safety and which is more resilient against failure.

### Summary of Invention

The invention is defined by the appended claims. The description that follows is subjected to this limitation. Any disclosure lying outside the scope of the claims is only intended for illustrative as well as comparative purposes.

According to an embodiment, an electrical energy system for a vehicle is provided. The electrical energy system includes a high voltage system including a plurality of battery cells arranged in at least two strings of battery cells, the battery cells of each string being connected in series, a low voltage system, at least one DC/DC converter for each of the strings of battery cells connected in series to respective opposite ends of the strings of battery cells, the DC/DC converters being configured to down-convert a high voltage from the high voltage system to a low voltage provided to the low voltage system, a cell supervision system for supervising voltages of individual battery cells of the high voltage system including a separate communication loop for each of the strings of battery cells for independently supervising battery cell voltages within each of the strings of battery cells, a switching unit configured to selectively connect the strings in series or disconnect the strings from each other and to selectively connect at least one of the strings with or disconnect at least one of the strings from the high voltage system and the low voltage system and a control unit configured to, in a case of a failure of one of the communication loops, one of the DC/DC converters and/or one of the strings, control the switching unit to disconnect the affected string from the high voltage system and the low voltage system and to connect or keep the respective other string connected with the high voltage system and the low voltage system.

According to another embodiment, an electric vehicle including the electrical energy system is provided.

Yet another embodiment of the present disclosure refers to a method for a vehicle including the steps of a) providing the above-mentioned electrical energy system, b) independently supervising the battery cell voltages within each of the strings of battery cells, and c) when a failure of one of the communication loops, one of the DC/DC converters and/or one of the strings is detected, controlling the switching unit to disconnect the affected string from the high voltage system and the low voltage system and to connect or keep the respective other string connected with the high voltage system and the low voltage system.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates an electric circuit diagram of an electrical energy system according to an embodiment.
FIG. 2 illustrates a perspective schematic view of a vehicle including the electrical energy system.
FIG. 3 illustrates a schematic flow chart of a method for a vehicle according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, an electrical energy system for a vehicle is provided. The vehicle may be an electric vehicle. The electrical energy system includes a high voltage system including a plurality of battery cells arranged in at least two strings of battery cells, a low voltage system, at least one DC/DC converter for each of the strings of battery cells, a cell supervision system for supervising voltages of individual battery cells of the high voltage system, a switching unit and a control unit.

The battery cells of each string of the high voltage system are connected in series. In other words, the battery cells of the plurality of battery cells of the high voltage system are partitioned or divided into separate functional units, each functional unit being connected to its own (at least one) DC/DC converter. For this reason, each of the separate functional units include a separate wiring for connection with the respective DC/DC converter. That is, in case that one of the battery cells of the high voltage system causes failure, the corresponding functional unit including the failed battery cell may not supply electrical energy to its DC/DC converter anymore, while the remaining functional units still operate and supply their DC/DC converters with high voltage such that at least a partial energy supply from the high voltage system may be upheld. Since the DC/DC converter are supplied from a separate functional unit, a full redundant operation thereof is possible and a failsafe voltage supply for the low voltage system and/or the high voltage system is provided (e.g. as required for safety critical system such as autonomous driving). For example, each of the strings may provide a voltage of 400 V. Accordingly, when two strings are connected in series, a voltage of 800 V may be obtained which may correspond to the voltage amount of the high voltage system. Usually, 800 V may be used for driving the vehicle and 400 V may be used to charge the battery cells of the electrical energy system. In other words, the high voltage system may be coupled with a load of the vehicle for driving the vehicle.

The low voltage system may supply power to a 12V boardnet of the vehicle. In other words, the low voltage system may be coupled with different components connected to the 12V onboard power system of the vehicle.

Each of the DC/DC converters is connected in series to respective opposite ends of the (respective associated) string of battery cells. The DC/DC converters are configured to down-convert a high voltage from the high voltage system to a low voltage provided to the low voltage system. A work principle of a DC/DC converter may be to convert a direct current DC to an alternating current AC, the AC to an AC of a different voltage and then the AC of the different voltage back to a DC again to substantially provide a down-conversion of the input DC to a down-converted output DC. The DC/DC converter may each be configured to use (or work with) an AC signal having multiple phases during conversion. In other words, the AC power unit of each of the DC/DC converters may be designed to provide an AC signal having more phases to minimize the ripple on the output voltage, e.g. four phases shifted by 90°. The DC/DC converters may be installed inside the high voltage system, e.g. inside the housing of the high voltage system. The DC/DC converters may be evenly referred to the plurality of battery cells. For example, in case of two DC/DC converters, each of the DC/DC converters may be supplied from of a different half of the high voltage system. This allows a full redundant operation of the DC/DC converters and provides a fail-safe voltage supply to the low voltage system, e.g. the 12V onboard power system, which may be used for safety critical systems, like autonomous driving.

The cell supervision system includes a separate communication loop for each of the strings of battery cells for independently supervising battery cell voltages within each of the strings of battery cells. In other words, each string of battery cells is connected via a separate wiring to the cell supervision system. Accordingly, in case that one of the communication loops is subject to failure, e.g. due to high temperatures caused by a thermal runaway within one of the two strings of battery cells, the safe operation of at least other one of the two DC/DC converters may be ensured.

The switching unit is configured to selectively connect the strings in series or to selectively disconnect the strings from each other. The switching unit is further configured to selectively connect at least one of the strings with the high voltage system and the low voltage system or to selectively disconnect at least one of the strings from the high voltage system and the low voltage system.

The control unit is configured to, in a case of a failure of one of the communication loops, one of the DC/DC converters and/or one of the strings, control the switching unit to disconnect the affected string from the high voltage system and the low voltage system and to connect or keep the respective other string connected with the high voltage system and/or the low voltage system. In other words, in case of a failure of one of or only some of the strings, only the string(s) of the electrical energy system being affected by failure is/are disconnected from the high and low voltage systems, while the remaining string(s) are still connected to the low and high voltages systems to supply power thereto. A failure may be detected by the cell supervision system, for example.

In other words, the electrical energy system is configured to maintain the availability of the low voltage system and the high voltage system due to the use of the string(s) which is/are not affected by a failure. Advantageously, an architecture with two independent DC/DC converters inside the battery pack may provide a redundant 12V power supply without the need of an additional 12V lead acid battery. As the 12V lead acid battery is not necessary to provide redundancy, weight can be saved and the risk of an unnoticed degradation of the 12V lead acid battery as known in the prior art is wiped out. Furthermore, by still providing power supply to the high voltage system (however at lower voltage), a reduced power mode can be provided. The reduced power mode may be implemented as a limp home mode of the vehicle. Accordingly, it will be still possible to drive the vehicle in a limp home mode in case of a corresponding failure, however at lower power. The reduced power mode may be an additional function which is combinable with the 12V power supply function.

According to one embodiment, the electrical energy system may further include a synchronization connection line between the DC/DC converters for exchanging signals therebetween for synchronized control of the DC/DC converters. Each of the DC/DC converters may be configured to provide partial output currents to the low voltage system which were converted by using AC signals during conversion which are phase shifted to each other. In other words, the multiple phases used to provide an output voltage to the low voltage system at reduced occurrence of ripples are distributed between the at least two DC/DC converters with corresponding synchronized phase shifts of the AC signals during conversion. Advantageously, the individual DC/DC converters are required to provide less phases so that less expensive DC/DC converters may be used. In other words, the output current of the DC/DC converters using less phases may thus be similar to the output current of the DC/DC converters each using all phases but at lower cost. The synchronization connection line may be additionally coupled with the control unit. The control unit may be configured to control the synchronization of the DC/DC converters to provide respective phase shifted output currents having multiphases.

According to another embodiment, the DC/DC converters may be each configured to provide a respective half of the phases of the output current provided to the low voltage system. For example, the AC signals used during conversion may have four phases shifted by 90° to enable an output voltage with a sufficiently low ripple. In this case, the first DC/DC converter may be configured to provide the first and third phase shifted signal of the output current and the second DC/DC converter may be configured to provide the second and fourth phase shifted signal of the output current. For the case that a higher ripple is allowed, e.g. in the case of a failure situation, the phases may be split on the (at least) two DC/DC converters, so that each DC/DC converter provides a corresponding part of the phases, e.g. a half of the phases in the light of two DC/DC converters, which are normally used for the boardnet requirement. Thus, in case of a failure, only one of the DC/DC converters is working and thus the ripple is higher, which is tolerated to enable the limp home functionality.

According to another embodiment, the electrical energy system may be configured to, in case of a failure of one of the communication loops, one of the DC/DC converters and/or one of the strings, request the vehicle to switch into a limp home function to reduce the required power in the low voltage system. The request may be an electronic signal output by the electrical energy system, e.g. by the control unit. The limp home function allows to reduce the power for the DC/DC converters. For example, if the required power in the low voltage system can be cut in half during the limp home function, the operating power of each DC/DC converter can also be cut in half or the failure of one or more DC/DC converters can be compensated by the remaining DC/DC converter(s). In other words, the DC/DC converters may be downsized such that the cost of the DC/DC converters can be reduced or a redundancy of the DC/DC converters may be achieved.

According to another embodiment, wherein the high voltage system may be configured to provide half of a regular driving voltage during an activated limp home function of the vehicle. For example, the output voltage of the high voltage system may be 400 V instead of 800 V as the regular driving voltage. In the case that two strings of battery cells are connected in series, each providing a voltage of 400 V, a combined voltage of 800V as the regular driving voltage may be obtained. However, when one of the strings fails, the respective other string may still function to provide half of the regular driving power, in this case the voltage of 400 V, which may be used for traction of the vehicle (at reduced power during the limp home mode).

According to another embodiment, the switching unit may include a first switch, a second switch and a third switch. The first switch may be connected between a negative conductor of the first string and a positive conductor of the second string. The second switch may be connected between the negative conductor of the first string and a negative main line of the high voltage system. The third switch may be connected between the positive conductor of the second string and a positive main line of the high voltage system. The control unit may be configured to open the first switch and the second switch and to close the third switch in a case of a failure of the first communication loop, the first DC/DC converter and/or the first string. Additionally or alternatively, the control unit may be configured to open the first switch and the third switch and to close the second switch in a case of a failure of the second communication loop, the second DC/DC converter and/or the second string. Advantageously, the strings of battery cells may be selectively connected and disconnected from the low and high voltage systems on an individual scale and at low cost.

According to another embodiment, the switching unit may include a first main switch and a second main switch. The first main switch may be for selectively connecting or disconnecting the strings of battery cells with a positive main line of the high voltage system. The second main switch may be for selectively connecting or disconnecting the strings with a negative main line of the high voltage system. In other words, the first and second main switches may be arranged at the main lines of the high voltage system. The control unit may be configured to open the first main switch and the second main switch for disconnecting the strings from the high voltage system. Additionally or alternatively, the control unit may be configured to close the first main switch and the second main switch for connecting the strings to the high voltage system. Advantageously, the power supply to the high voltage system may be selectively enabled or disabled at low cost.

According to one embodiment, the cell supervision system may include a plurality of slave battery management systems, BMS, for each of the strings of battery cells for battery cell voltage sensing and balancing of the battery cell voltages within each of the strings of battery cells. In other words, the slave battery management systems are configured to sense and balance battery cell voltages of the battery cells of the associated string of battery cells. Each of the slave BMS associated with one string of battery cells may be connected to the separate communication loop associated with the respective string of battery cells. That is, in case a slave BMS fails, only one of the DC/DC converters fails, namely the DC/DC converter associated with the string of battery cells including the affected slave BMS, while operation of the one or more other DC/DC converter(s) is still possible to supply low voltage to the low voltage system and/or to supply a (reduced) high voltage to the high voltage system.

According to another embodiment, the low voltage system may not include a low voltage battery. For example, the low voltage provided in the low voltage system may not be provided by a low voltage battery, e.g. a 12V lead acid battery. In other words, the low voltage system may be only supplied by the one or more DC/DC converters. Instead of using a 12V lead acid battery, which becomes less useful in electrical vehicles due to the lack of a need of a starter for a combustion engine, supply of the onboard power system is ensured by using the at least two independent strings of battery cells of the high voltage system and the DC/DC converters.

According to another embodiment, each the DC/DC converters may be configured to cover a partial amount of the total current requirement of the low voltage system. The partial amount may be determined based on the number of total DC/DC converters of the electrical energy system. The partial amount may be obtained by dividing the total current requirement of the low voltage system by the number of total DC/DC converters of the electrical energy system. Each the DC/DC converters may be configured to cover at least 25% or at least 50%, e.g. 70% of a total power requirement of the low voltage system. For example, when the required power can be reduced to the half, e.g. during an activated limp home function, each DC/DC converter may be configured to provide half of the normal operating power (or of the full load), i.e. 50 % of the total power requirement of the low voltage system when two DC/DC are used. This saves costs. However, the present disclosure is not limited thereto. For example, depending on the required power of the low voltage system (for safety), the DC/DC converters may also be designed differently, e.g. each of the DC/DC converter may be configured to provide 70% of the normal operating power (or of the full load).

According to another embodiment, the DC/DC converters may be connected in parallel to the low voltage system. Accordingly, the current provided to the low voltage system is a combined current provided by the DC/DC converters. Accordingly, the current provided to the low voltage system is increased, e.g. doubled. Also, in case one of the DC/DC converters being shut off (e.g. due to a failure or due to other reasons), the respective other DC/DC converter(s) may still operate and supply the low voltage system with low voltage, however at a reduced current.

According to another embodiment, the electrical energy system may be configured to selectively shut off or connect one or both of the DC/DC converters to the low voltage system. A time of operation of the DC/DC converters being shut off from the low voltage system may be limited. When a DC/DC converter is shut off from the low voltage system, the strings of battery cells of the high voltage system are discharged unevenly. Due to the time limit, too much disbalance of the charge states between the strings of battery cells may be prevented. Accordingly, the service life of the electrical energy system may be preserved.

According to another aspect, an electric vehicle including the above-mentioned electrical energy system is provided. The electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs. The features and advantages described in view of the above-mentioned electrical energy system may be analogously applied to the electric vehicle.

According to another aspect, a method for a vehicle, e.g. the above-mentioned vehicle, is provided. The features and advantages described in view of the above-mentioned electrical energy system or the above-mentioned vehicle including the electrical energy system may be analogously applied to the method.

According to a first step of the method, the above-mentioned electrical energy system is provided.

According to a second step of the method, the battery cell voltages within each of the string of battery cells is supervised independently. In other words, the battery cell voltages of each individual battery of the strings of battery cells are supervised through the supervision cell system connected to the high voltage system via the separate communication loops.

According to a third step of the method, when a failure of one of the communication loops, one of the DC/DC converters and/or one of the strings is detected, the switching unit is controlled to disconnect the affected string from the high voltage system and the low voltage system and to connect or keep the respective other string connected with the high voltage system and/or the low voltage system.

### Specific Embodiments

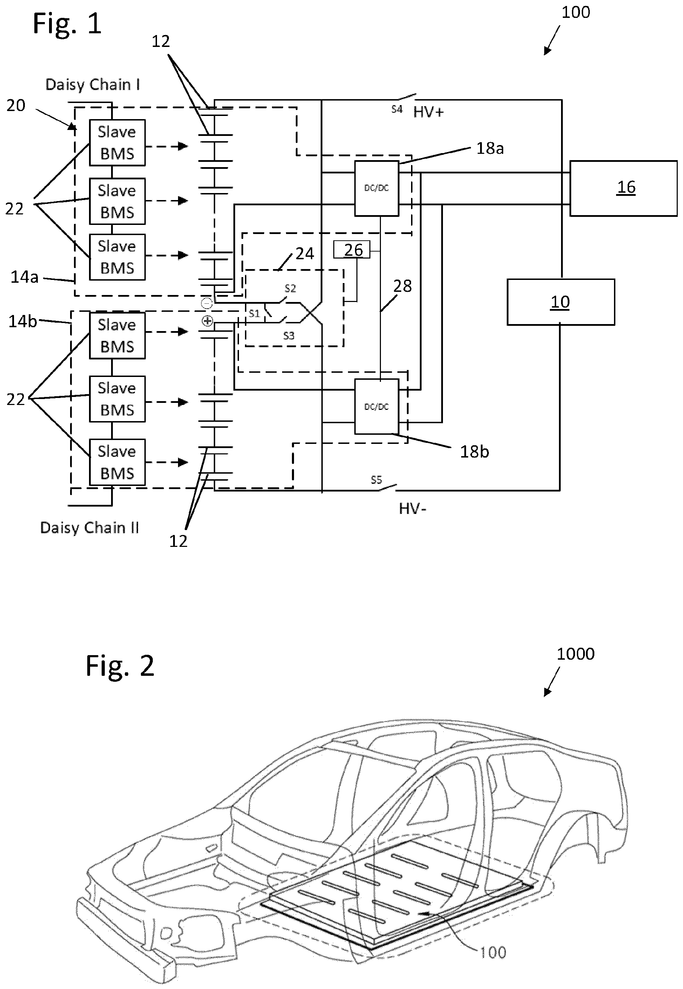

FIG. 1 depicts an electric circuit diagram of an electrical system 100 for a vehicle 1000 according to an embodiment.

The electrical system 100 includes a high voltage system 10 configured to provide a high voltage, e.g. of 800 V. The high voltage system 10 includes a plurality of battery cells 12 arranged in two strings 14a, 14b of battery cells 12. Each of the two strings 14a, 14b provide an output voltage of 400 V, respectively. Although two strings 14a, 14b of battery cells are shown, the disclosure is not limited thereto. For example, the plurality of battery cells 12 may be arranged in any desired number of strings 14a, 14b of battery cells 12, e.g. three, four, five, six or more strings 14a, 14b. The battery cells 12 of each string 14a, 14b of the high voltage system 10 are connected in series. As the strings 14a, 14b are connected in series, a (combined) voltage of 800 V is obtained which corresponds to the voltage required by the high voltage system. Usually, 800 V may be used for driving the vehicle 1000 and 400 V may be used to charge the battery cells 12 of the electrical energy system 100.

In other words, the battery cells 12 as shown in FIG. 1 are partitioned or divided into separate functional units based on the amount of strings 14a, 14b. That is, in case that one of the battery cells 12 of the high voltage system 10 causes failure - e.g. a battery cell 12 of the first string 14a of battery cells 12 malfunctions - only the functional unit corresponding the failed battery cell 12 of the high voltage system 10 may not work properly anymore to supply high voltage. The other functional unit(s) of the high voltage system 10 - e.g. the second string 14b of the high voltage system 10 - is/are still operating and supplying high voltage. Accordingly, a failure of a battery cell 12 does not cause a failure of the entire high voltage system 10. In contrast at least a part, e.g. the second half, of the high voltage system 10 provides high voltage.

The electrical energy system 100 further includes a low voltage system 16, e.g. to provide power to a 12V onboard power system of the vehicle 1000, and one DC/DC converter 18a, 18b for each of the strings 14a, 14b of battery cells 12. On the input side, the first DC/DC converter 18a is connected in series to the first string 14a of battery cells 12, more specifically to opposite ends of the first string 14a of battery cells 12. On the output side, the first DC/DC converter 18a is connected to the low voltage system 16. On the input side, the second DC/DC converter 18b is connected in series to the second string 14b of battery cells 12, more specifically to opposite ends of the second string 14b of battery cells 12. On the output side, the second DC/DC converter 18b is connected to the low voltage system 16.

The DC/DC converters 18a, 18b are configured to down-convert a high voltage, e.g. of 400 V, from the high voltage system 10 to a low voltage, e.g. to 12 V, thereby supplying the low voltage system 16 with electrical energy provided by the high voltage system 10. For example, the high voltage system 10 and the DC/DC converters 18a, 18b may represent the only supply source of electrical energy of the low voltage system 16. That is, in some embodiments, the electrical energy system 100 may not include a (separate) low voltage battery, e.g. a 12V lead acid battery.

Furthermore, the DC/DC converters 18a, 18b are connected in parallel to the low voltage system 16. This configuration allows redundancy, e.g. in case that the first DC/DC converter 18a is shut off or subject to failure, the second DC/DC converter 18b still operates and supplies the low voltage system 16 with low voltage (and vice versa).

As further shown in FIG. 1, the electrical energy system 100 includes a cell supervision system 20 for supervising voltages of individual battery cells 12 of the high voltage system 10. The cell supervision system 20 includes a separate communication loop for each of the strings 14a, 14b of battery cells 12 for independently supervising battery cell voltages within each of the strings 14a, 14b of battery cells 12. In other words, each string 14a, 14b of battery cells 12 is connected via a separate wiring to the cell supervision system 20. Accordingly, in case that one of the communication loops is subject to failure, e.g. due to high temperatures caused by a thermal runaway within one of the strings 14a, 14b of battery cells 12, the safe operation of at least the other one of the DC/DC converters 18a, 18b may be ensured.

More specifically, the cell supervision system 20 includes a plurality of slave battery management systems, BMS, 22 for each of the strings 14a, 14b of battery cells 12 for battery cell voltage sensing and balancing of the battery cell voltages within each of the strings 14a, 14b of battery cells 12. The slave BMSs 22 of one communication loop may communicate via one daisy chain bus. In other words, the cell supervision system 20 may include a daisy chain bus for each of the communication loops. The daisy chain buses of the separate communication loops may not be interconnected. Accordingly, even if the communication of one daisy chain bus is interrupted, the communication of the remaining daisy chain bus(es) is maintained. For example, the cell supervision system 20 may include three slave BMS 22 for the first string 14a of battery cells 12 and another three slave BMS 22 for the second string 14b of battery cells. As indicated by the dotted arrows in FIG. 1, each of the slave BMS 22 is separately connected to the respective battery cells 12 by a separate wiring. That is, the communication loops may include a separate wiring for each of the slave BMS 22. In other words, each of the slave BMS 22 associated with one string 14a, 14b of battery cells 12 may be connected to the separate communication loop associated with the respective string 14a, 14b of battery cells 12.

That is, in case a slave BMS 22 fails, (only) the DC/DC converter 18a, 18b associated with or affected by the failed slave BMS 22 is disconnected from the low voltage system 16. Alternatively, only the battery cell(s) 12 supervised by the failed slave BMS 22 may be shut down, i.e. disconnected from the string 14a, 14b associated with the failed slave BMS 22, e.g. via a switching means configured to disconnect one or each of the battery cells 12 supervised by one of the slave BMS 22 from the string 14a, 14b of battery cells 12 and to maintain the connection of the remaining string 14a, 14b of battery cells 12 through a connection line bypassing the disconnected battery cell(s) 12 (not shown in Fig. 1). Accordingly, the output of high voltage of the respective string 14a, 14b of battery cells 12 to the DC/DC converter 18a, 18b is reduced by that amount of the failed battery cell(s) 12. Nevertheless, operation of the respective other DC/DC converter 18a, 18b not affected by the failed slave BMS 22 is independently possible such that the supply of low voltage to the low voltage system 16 may be ensured even if a slave BMS 22 is subject to failure.

The electrical energy system 100 further includes a switching unit 24 configured to selectively connect the strings 14a, 14b in series or to selectively disconnect the strings 14a, 14b from each other. The switching unit 24 is further configured to selectively connect at least one of the strings 14a, 14b with the high voltage system 10 and the low voltage system 16 or to selectively disconnect at least one of the strings 14a, 14b from the high voltage system 10 and the low voltage system 16.

The electrical energy system 100 further includes a control unit 26 configured to, in a case of a failure of one of the communication loops, one of the DC/DC converters and/or one of the strings, control the switching unit 24 to disconnect the affected string 14a, 14b from the high voltage system 10 and the low voltage system 16 and to connect or keep the respective other string 14b, 14a connected with the high voltage system 10 and/or the low voltage system 16. In other words, in case of a failure of one of or only some of the strings 14a, 14b, only the string(s) 14a, 14b of the electrical energy system 100 being affected by failure is/are disconnected from the high and low voltage systems 10, 16, while the remaining string(s) 14b, 14a are still connected to the low and high voltages systems 10, 16 to supply power thereto. A failure may be detected by the cell supervision system 20, for example.

As shown in FIG. 1, the switching unit 24 includes a first switch S1, a second switch S2 and a third switch S3. The first switch S1 is connected between a negative conductor of the first string 14a of battery cells 12 and a positive conductor of the second string 14b of battery cells 12. The second switch S2 is connected between the negative conductor of the first string 14a of battery cells 12 and a negative main line HV- of the high voltage system 10 and/or a negative conductor of the second string 14b of battery cells 12. The third switch S3 is connected between the positive conductor of the second string 14b of battery cells 12 and a positive main line HV+ of the high voltage system 10 and/or a positive conductor of the first string 14a of battery cells 12. The main lines HV+, HV- of the high voltage system 10 may be coupled to the load of the vehicle 1000 requiring the high voltage, e.g. a driving system of the vehicle 1000.

The switching unit 24 further includes a first main switch S4 and a second main switch S5. The first main switch S4 selectively connects or disconnects the strings 14a, 14b of battery cells 12 with the positive main line HV+ of the high voltage system 10. The second main switch S5 selectively connects or disconnects the strings 14a, 14b of battery cells 12 with the negative main line HV- of the high voltage system 10. That is, the first and second main switches S4, S5 are arranged at the main lines HV+, HV- of the high voltage system 10. Although FIG. 1 depicts the first and second main switches S4, S5, the disclosure is not limited thereto and these features may also be omitted.

Table 1 indicates operations modes of the electrical energy system 100 at which the electrical energy system 100 can be operated. The control unit 26 is configured to control the first to third switches S1, S2, S3 and the first and second main switches S4, S5 as required by each of the operation modes as shown in table 1.

**Table 1: Operation modes of the first to third switches S1, S2, S3 and the first and second main switches S4, S5; C - closed and O - open**

| Operation Mode | S1 | S2 | S3 | S4 | S5 |
|---|---|---|---|---|---|
| 1 Normal 800V | C | O | O | C | C |
| 2 Normal 400V (parallel) | O | C | C | C | C |
| 3 Upper failure | O | O | C | C | C |
| 4 Lower failure | O | C | O | C | C |
| 5 Battery Disconnect | O | O | O | O | O |

According to a first operation mode, the first switch S1 and the first and second main switches S4, S5 are closed and the second and third switches S2, S3 are opened. This operation mode refers to a normal 800V operation mode, allowing to provide the vehicle 1000 with a high voltage of 800 V (regular driving mode).

According to a second operation mode, the first switch S1 is opened and the second and third switches S2, S3 and the first and second main switches S4, S5 are closed. This operation mode refers to a normal 400V operation mode, allowing to charge the battery cells 12 at 400 V (regular charging mode).

According to a third operation mode, the third switch S3 and the first and second main switches S4, S5 are closed and the first and second switches S1, S2 are opened. This operation mode refers to an upper failure operation mode in which the first string 14a of battery cells 12 is disconnected from the high and low voltage systems 10, 16 (limp home mode at reduced power). This mode allows to use one half of the strings 14b in case of a failure of the other half of the strings 14a (battery cells 12 or cell supervision daisy chain) to enable limp home at reduced power. The DC/DC converter 18b provides sufficient power for the 12 V boardnet of the vehicle 1000. The DC/DC converter 18a of the defective half of strings 14a is inactivated.

According to a fourth operation mode, the second switch S2 and the first and second main switches S4, S5 are closed and the first and third switches S1, S3 are opened. This operation mode refers to an lower failure operation mode in which the second string 14b of battery cells 12 is disconnected from the high and low voltage systems 10, 16 (limp home mode at reduced power). This mode allows to use one half of the strings 14a in case of a failure of the other half of the strings 14b (battery cells 12 or cell supervision daisy chain) to enable limp home at reduced power. The DC/DC converter 18a provides sufficient power for the 12 V boardnet of the vehicle 1000. The DC/DC converter 18b of the defective half of strings 14b is inactivated.

According to a fifth operation mode, the first to third switches S1, S2, S3 and the first and second main switches S4, S5 are opened. This operation mode refers to a battery disconnect operation mode, allowing entirely disconnecting the battery cells 12 of the electrical energy system 100 to not provide any power to the vehicle 1000.

In other words, the control unit 26 is configured to open the first switch S1 and the second switch S2 and to close the third switch S3 in a case of a failure of the first communication loop, the first DC/DC converter 18a and/or the first string 14a of battery cells 12 (operation mode "3 Upper failure"). Additionally or alternatively, the control unit 26 is configured to open the first switch S1 and the third switch S3 and to close the second switch S2 in a case of a failure of the second communication loop, the second DC/DC converter 18b and/or the second string 14b of battery cells 12 (operation mode "4 Lower failure"). Advantageously, the strings 14a, 14b of battery cells 12 are selectively connectable and disconnectable from the low and high voltage systems 16, 10 on an individual scale and at low cost.

Furthermore, the control unit 26 is configured to open the first main switch S4 and the second main switch S5 for disconnecting the strings 14a, 14b of battery cells 12 from the high voltage system 10. Additionally or alternatively, the control unit 26 is configured to close the first main switch S4 and the second main switch S5 for connecting the strings 14a, 14b of battery cells 12 to the high voltage system 10. Advantageously, the power supply to the high voltage system 10 may be selectively enabled or disabled at low cost.

Furthermore, the DC/DC converters 18a, 18b are each configured to provide a respective half of the phases of the output current provided to the low voltage system 16. That is, the AC signals used during conversion of the DC/DC voltage include four phases shifted by 90° to enable an output voltage with a sufficiently low ripple. For example, the first DC/DC converter 18a is configured to provide the first and third phase shifted signal of the output current and the second DC/DC converter 18b is configured to provide the second and fourth phase shifted signal of the output current. For the case that a higher ripple is allowed, e.g. in the case of a failure situation (e.g. operation modes 3 and 4), the phases may be split on the (at least) two DC/DC converters 18a, 18b, so that each DC/DC converter 18a, 18b provides a corresponding part of the phases, which are normally used for the boardnet requirement. Thus, in case of a failure, only one of the DC/DC converters 18a, 18b is working and thus the ripple is higher, which is tolerated to enable the limp home functionality.

In order to synchronize the phase shifted AC signals of the DC/DC converters 18a, 18b, the electrical energy system 100 further includes a synchronization connection line 28 arranged between the DC/DC converters 18a, 18b for exchanging synchronization control signals therebetween (cf. FIG. 1). Each of the DC/DC converters 18a, 18b is configured to provide partial output currents to the low voltage system 16 which were converted by using AC signals during conversion which are phase shifted to each other. In other words, the multiple phases used to provide an output voltage to the low voltage system 16 at reduced occurrence of ripples are distributed between the at least two DC/DC converters 18a, 18b with corresponding synchronized phase shifts of the AC signals during conversion. Advantageously, the individual DC/DC converters 18a, 18b are required to provide less phases so that less expensive DC/DC converters 18a, 18b may be used. In other words, the output current of the DC/DC converters 18a, 18b using less phases may thus be similar to the output current of the DC/DC converters each using all phases but at lower cost. The synchronization connection line 28 is additionally coupled with the control unit 26. The control unit 26 is configured to control the synchronization of the DC/DC converters 18a, 18b to provide respective phase shifted output currents having multiphases.

The electrical energy system 100 according to the disclosure is configured to maintain the availability of the low voltage system 16 and the high voltage system 10 due to the use of the or those string(s) 14a, 14b which are not affected by a failure. Advantageously, an architecture with at least two independent DC/DC converters 18a, 18b inside the electrical energy system 100, e.g. a battery pack, may provide a redundant 12V power supply without the need of an additional 12V lead acid battery. As the 12V lead acid battery is not necessary to provide redundancy, weight can be saved and the risk of an unnoticed degradation of the 12V lead acid battery as known in the prior art is wiped out. Furthermore, by still providing power supply to the high voltage system 10 (however at lower voltage), a reduced power mode can be provided. The reduced power mode may be implemented as a limp home mode of the vehicle 1000. Accordingly, it will be still possible to drive the vehicle 1000 in a limp home mode in case of a corresponding failure, however at lower power. The reduced power mode may be an additional function which is combinable with the 12V power supply function.

FIG. 2 illustrates a perspective schematic view of a vehicle 1000 including the electrical energy system 100 of FIG. 1. The vehicle 1000 is an electric vehicle solely powered by batteries (Battery Electric Vehicle BEV). However, the present disclosure is not limited thereto. The vehicle may also be an electric vehicle including a combination of an electric motor and, for example, a conventional combustion engine (Plugin Hybrid Electric Vehicle PHEV). BEVs and PHEVs use high-capacity rechargeable batteries, such as the electrical energy system 100 of FIG. 1, which are designed to provide power for propulsion over sustained periods of time. FIG. 2 depicts an exemplary arrangement of the electrical energy system 100 of FIG. 1 in the underbody of the vehicle 1000. However, the electrical energy system 100 may be arranged differently, e.g. in the engine compartment or in the luggage compartment of the vehicle 1000 (not shown).

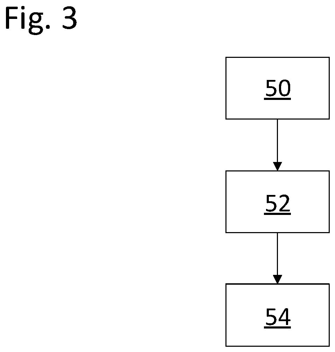

FIG. 3 illustrates a schematic flow chart of a method for a vehicle 1000 including the electric energy system 100 of FIG. 1.

According to a first step 50 the above-mentioned electrical energy system 100 is provided, i.e. an electrical energy system 100 including a high voltage system 10 including a plurality of battery cells 12 arranged in at least two strings 14a, 14b of battery cells 12, the battery cells 12 of each string 14a, 14b being connected in series a low voltage system 16, at least one DC/DC converter 18a, 18b for each of the strings 14a, 14b of battery cells 12 connected in series to respective opposite ends of the strings 14a, 14b of battery cells 12, the DC/DC converters 18a, 18b being configured to down-convert a high voltage from the high voltage system 10 to a low voltage provided to the low voltage system 16, a cell supervision system 20 for supervising voltages of individual battery cells 12 of the high voltage system 10 including a separate communication loop for each of the strings 14a, 14b of battery cells 12 for independently supervising battery cell voltages within each of the strings 14a, 14b of battery cells 12, a switching unit 24 configured to selectively connect the strings 14a, 14b in series or disconnect the strings 14a, 14b from each other and to selectively connect at least one of the strings 14a, 14b with or disconnect at least one of the strings 14a, 14b from the high voltage system 10 and the low voltage system 16 and a control unit 26 configured to, in a case of a failure of one of the communication loops, one of the DC/DC converters 18a, 18b and/or one of the strings 14a, 14b, control the switching unit 24 to disconnect the affected string 14a, 14b from the high voltage system 10 and the low voltage system 16 and to connect or keep the respective other string 14b, 14a connected with the high voltage system 10 and/or the low voltage system 16.

According to a second step 52 of the method, the battery cell voltages within each of the string 14a, 14b of battery cells 12 are supervised independently. In other words, the battery cell voltages of each individual battery 12 of the strings 14a, 14b of battery cells 12 are supervised through the supervision cell system 20 connected to the high voltage system 10 via the separate communication loops.

According to a third step 54 of the method, when a failure of one of the communication loops, one of the DC/DC converters 18a, 18b and/or one of the strings 14a, 14b is detected (e.g. based on the second step 52), the switching unit 24 is controlled to disconnect the affected string 14a, 14b from the high voltage system 10 and the low voltage system 16 and to connect or keep the respective other string 14b, 14a connected with the high voltage system 10 and/or the low voltage system 16.

### Reference signs

- 10: high voltage system
- 12: plurality of battery cells
- 14a, 14b: strings of battery cells
- 16: low voltage system
- 18a, 18b: DC/DC converter
- 20: cell supervision system
- 22: slave battery management systems
- 24: switching unit
- 26: control unit
- 28: synchronization connection line

- 50: first method step - providing an electrical energy system
- 52: second method step - independently supervising
- 54: optional third method step - controlling the switching unit

- 100: electrical energy system
- 1000: vehicle

## Claims

1. An electrical energy system (100) for a vehicle (1000), comprising:
a high voltage system (10) comprising a plurality of battery cells (12) arranged in at least two strings (14a, 14b) of battery cells (12), the battery cells (12) of each string (14a, 14b) being connected in series,
a low voltage system (16),
at least one DC/DC converter (18a, 18b) for each of the strings (14a, 14b) of battery cells (12) connected in series to respective opposite ends of the strings (14a, 14b) of battery cells (12), the DC/DC converters (18a, 18b) being configured to down-convert a high voltage from the high voltage system (10) to a low voltage provided to the low voltage system (16),
a cell supervision system (20) for supervising voltages of individual battery cells (12) of the high voltage system (10) comprising a separate communication loop for each of the strings (14a, 14b) of battery cells (12) for independently supervising battery cell voltages within each of the strings (14a, 14b) of battery cells (12),
a switching unit (24) configured to selectively connect the strings (14a, 14b) in series or disconnect the strings (14a, 14b) from each other and to selectively connect at least one of the strings (14a, 14b) with or disconnect at least one of the strings (14a, 14b) from the high voltage system (10) and the low voltage system (16) and
a control unit (26) configured to, in a case of a failure of one of the communication loops, one of the DC/DC converters (18a, 18b) and/or one of the strings (14a, 14b), control the switching unit (24) to disconnect the affected string (14a, 14b) from the high voltage system (10) and the low voltage system (16) and to connect or keep the respective other string (14b, 14a) connected with the high voltage system (10) and/or the low voltage system (16).

2. The electrical energy system (100) according to claim 1, further comprising a synchronization connection line (28) between the DC/DC converters (18a, 18b) for exchanging signals therebetween for synchronized control of the DC/DC converters (18a, 18b), wherein the DC/DC converters (18a, 18b) are configured to provide output currents to the low voltage system (16) which are phased shifted with respect to each other.

3. The electrical energy system (100) according to claim 2, wherein the DC/DC converters (18a, 18b) are each configured to provide a respective half of the phases of the output current provided to the low voltage system (16).

4. The electrical energy system (100) according to any one of the preceding claims, wherein the electrical energy system (100) is configured to, in case of a failure of one of the communication loops, one of the DC/DC converters (18a, 18b) and/or one of the strings (14a, 14b), request the vehicle (1000) to switch into a limp home function to reduce the required power in the low voltage system (16).

5. The electrical energy system (100) according to any one of the preceding claims, wherein the high voltage system (10) is configured to provide half of a regular driving voltage during an activated limp home function of the vehicle (1000).

6. The electrical energy system (100) according to any one of the preceding claims, wherein the switching unit (24) comprises:
- a first switch (S1) connected between a negative conductor of the first string (14a) and a positive conductor of the second string (14b),
- a second switch (S2) connected between the negative conductor of the first string (14a) and a negative main line (HV-) of the high voltage system (10) and
- a third switch (S3) connected between the positive conductor of the second string (14b) and a positive main line (HV+) of the high voltage system (10),
wherein the control unit is configured to open the first switch (S1) and the second switch (S2) and to close the third switch (S3) in a case of a failure of the first communication loop, the first DC/DC converter (18a) and/or the first string (14a) and/or
wherein the control unit is configured to open the first switch (S1) and the third switch (S3) and to close the second switch (S2) in a case of a failure of the second communication loop, the second DC/DC converter (18b) and/or the second string (14b).

7. The electrical energy system (100) according to any one of the preceding claims, wherein the switching unit (24) comprises:
- a first main switch (S4) for selectively connecting or disconnecting the strings (14a, 14b) with a positive main line (HV-) of the high voltage system (10) and
- a second main switch (S5) for selectively connecting or disconnecting the strings (14a, 14b) with a negative main line (HV-) of the high voltage system (10),
wherein the control unit is configured to open the first main switch (S4) and the second main switch (S5) for disconnecting the strings (14a, 14b) from the high voltage system (10) and/or to close the first main switch (S4) and the second main switch (S5) for connecting the strings (14a, 14b) to the high voltage system (10).

8. The electrical energy system (100) according to any one of the preceding claims, wherein the cell supervision system (20) comprises a plurality of slave battery management systems, BMS, (22) for each of the strings (14a, 14b) of battery cells (12) for battery cell voltage sensing and balancing of the battery cell voltages within each of the strings (14a, 14b) of battery cells (12).

9. The electrical energy system (100) according to any one of the preceding claims, wherein the low voltage system (16) does not comprise a low voltage battery.

10. The electrical energy system (100) according to any one of the preceding claims, wherein each the DC/DC converters (18a, 18b) is configured to cover a partial amount of the total current requirement of the low voltage system (16), wherein the partial amount is determined based on the number of total DC/DC converters (18a, 18b) of the electrical energy system (100).

11. The electrical energy system (100) according to any one of the preceding claims, wherein the DC/DC converters (18a, 18b) are connected in parallel to the low voltage system (16).

12. The electrical energy system (100) according to any one of the preceding claims, the electrical energy system (100) is configured to selectively shut off or connect one or both of the DC/DC converters (18a, 18b) to the low voltage system (16).

13. An electric vehicle (1000) including the electrical energy system (100) according to any one of the preceding claims.

14. A method for a vehicle (1000), wherein the method includes the steps of:
a) providing (50) an electrical energy system (100) as defined in any one of the claims 1 to 12; and
b) independently supervising (52) the battery cell voltages within each of the strings (14a, 14b) of battery cells (12), and
c) when a failure of one of the communication loops, one of the DC/DC converters (18a, 18b) and/or one of the strings (14a, 14b) is detected, controlling (54) the switching unit (24) to disconnect the affected string (14a, 14b) from the high voltage system (10) and the low voltage system (16) and to connect or keep the respective other string (14b, 14a) connected with the high voltage system (10) and/or the low voltage system (16).

## Amended claims

### Amended claims in accordance with Rule 137(2) EPC.

1. An electrical energy system (100) for a vehicle (1000), comprising:
a high voltage system (10) comprising a plurality of battery cells (12) arranged in at least two strings (14a, 14b) of battery cells (12), the battery cells (12) of each string (14a, 14b) being connected in series,
a low voltage system (16),
at least one DC/DC converter (18a, 18b) for each of the strings (14a, 14b) of battery cells (12) connected in series to respective opposite ends of the strings (14a, 14b) of battery cells (12), the DC/DC converters (18a, 18b) being configured to down-convert a high voltage from the high voltage system (10) to a low voltage provided to the low voltage system (16), wherein each of the DC/DC converters (18a, 18b) is configured to cover a partial amount of the total current requirement of the low voltage system (16), the partial amount being determined based on the number of total DC/DC converters (18a, 18b) of the electrical energy system (100),
a cell supervision system (20) for supervising voltages of individual battery cells (12) of the high voltage system (10) comprising a separate communication loop for each of the strings (14a, 14b) of battery cells (12) for independently supervising battery cell voltages within each of the strings (14a, 14b) of battery cells (12),
a switching unit (24) configured to selectively connect the strings (14a, 14b) in series or disconnect the strings (14a, 14b) from each other and to selectively connect at least one of the strings (14a, 14b) with or disconnect at least one of the strings (14a, 14b) from the high voltage system (10) and the low voltage system (16) and
a control unit (26) configured to, in a case of a failure of one of the communication loops, one of the DC/DC converters (18a, 18b) and/or one of the strings (14a, 14b), control the switching unit (24) to disconnect the affected string (14a, 14b) from the high voltage system (10) and the low voltage system (16) and to connect or keep the respective other string (14b, 14a) connected with the high voltage system (10) and/or the low voltage system (16),
wherein the electrical energy system (100) is configured to, in case of a failure of one of the communication loops, one of the DC/DC converters (18a, 18b) and/or one of the strings (14a, 14b), request the vehicle (1000) to switch into a limp home function to reduce the required power in the low voltage system (16).

2. The electrical energy system (100) according to claim 1, further comprising a synchronization connection line (28) between the DC/DC converters (18a, 18b) for exchanging signals therebetween for synchronized control of the DC/DC converters (18a, 18b), wherein the DC/DC converters (18a, 18b) are configured to provide output currents to the low voltage system (16) which are phased shifted with respect to each other.

3. The electrical energy system (100) according to claim 2, wherein the DC/DC converters (18a, 18b) are each configured to use a respective half of the sum of the phases of AC signals used during conversion to provide the output current to the low voltage system (16).

4. The electrical energy system (100) according to any one of the preceding claims, wherein the high voltage system (10) is configured to provide half of a regular driving voltage during an activated limp home function of the vehicle (1000).

5. The electrical energy system (100) according to any one of the preceding claims, wherein the switching unit (24) comprises:
- a first switch (S1) connected between a negative conductor of the first string (14a) and a positive conductor of the second string (14b),
- a second switch (S2) connected between the negative conductor of the first string (14a) and a negative main line (HV-) of the high voltage system (10) and
- a third switch (S3) connected between the positive conductor of the second string (14b) and a positive main line (HV+) of the high voltage system (10),
wherein the control unit is configured to open the first switch (S1) and the second switch (S2) and to close the third switch (S3) in a case of a failure of the first communication loop, the first DC/DC converter (18a) and/or the first string (14a) and/or
wherein the control unit is configured to open the first switch (S1) and the third switch (S3) and to close the second switch (S2) in a case of a failure of the second communication loop, the second DC/DC converter (18b) and/or the second string (14b).

6. The electrical energy system (100) according to any one of the preceding claims, wherein the switching unit (24) comprises:
- a first main switch (S4) for selectively connecting or disconnecting the strings (14a, 14b) with a positive main line (HV-) of the high voltage system (10) and
- a second main switch (S5) for selectively connecting or disconnecting the strings (14a, 14b) with a negative main line (HV-) of the high voltage system (10),
wherein the control unit is configured to open the first main switch (S4) and the second main switch (S5) for disconnecting the strings (14a, 14b) from the high voltage system (10) and/or to close the first main switch (S4) and the second main switch (S5) for connecting the strings (14a, 14b) to the high voltage system (10).

7. The electrical energy system (100) according to any one of the preceding claims, wherein the cell supervision system (20) comprises a plurality of slave battery management systems, BMS, (22) for each of the strings (14a, 14b) of battery cells (12) for battery cell voltage sensing and balancing of the battery cell voltages within each of the strings (14a, 14b) of battery cells (12).

8. The electrical energy system (100) according to any one of the preceding claims, wherein the low voltage system (16) does not comprise a low voltage battery.

9. The electrical energy system (100) according to any one of the preceding claims, wherein the DC/DC converters (18a, 18b) are connected in parallel to the low voltage system (16).

10. The electrical energy system (100) according to any one of the preceding claims, the electrical energy system (100) is configured to selectively shut off or connect one or both of the DC/DC converters (18a, 18b) to the low voltage system (16).

11. An electric vehicle (1000) including the electrical energy system (100) according to any one of the preceding claims.

12. A method for a vehicle (1000), wherein the method includes the steps of:
a) providing (50) an electrical energy system (100) as defined in any one of the claims 1 to 12; and
b) independently supervising (52) the battery cell voltages within each of the strings (14a, 14b) of battery cells (12), and
c) when a failure of one of the communication loops, one of the DC/DC converters (18a, 18b) and/or one of the strings (14a, 14b) is detected, controlling (54) the switching unit (24) to disconnect the affected string (14a, 14b) from the high voltage system (10) and the low voltage system (16) and to connect or keep the respective other string (14b, 14a) connected with the high voltage system (10) and/or the low voltage system (16) and requesting the vehicle (1000) to switch into a limp home function to reduce the required power in the low voltage system (16).
